# DEMANDE DE BREVET EUROPEEN

(11) **EP 0 876 899 A1**
(43) Date de publication de la demande: **11.11.1998**
(21) Numéro de dépôt: 98401104.9
(22) Date de dépôt: 06.05.1998
(51) Int. Cl.: B29C 65/10, B29C 51/00

(54) **Procédé de soudage de feuilles thermoformées de matière plastique et machine pour la mise en oeuvre de ce procédé**

(30) Priorité: 07.05.1997 FR 9705667
(71) Demandeur: HAMON INDUSTRIE THERMIQUE, f-92300 Levallois-Perret (FR)
(72) Inventeur: Martin, Claude, 41160 La Ville aux Clercs (FR)
(74) Mandataire: Martin, Jean-Paul

(57) **Abrégé**

Selon ce procédé, on souffle de l'air chaud à une température déterminée sur des plots (25, 26) de soudage des feuilles (19, 21, 22...) deux à deux, tout en exerçant sur les feuilles des efforts transversaux (P) afin de les maintenir appliquées l'une sur l'autre, puis on souffle de l'air froid sur les plots de soudage. La machine permet le soudage d'un bloc alvéolaire (18) de feuilles (19, 21, 22) superposées par leurs plots de contact mutuel, ces feuilles délimitant entre elles des alvéoles horizontaux (27, 28). Cette machine comprend deux batteries (23) de tubes (24) horizontaux, déplaçables horizontalement et adaptés pour pouvoir être introduit latéralement dans les alvéoles horizontaux du bloc, ces tubes étant munis de buses (29) de soufflage d'air sur les plots. Ce procédé permet de chauffer les plaques sans contact, donc dispense d'un cycle de nettoyage de la source de chaleur. Il permet de réaliser aisément la soudure de blocs alvéolaires de feuilles profilées en polypropylène ou polyéthylène sans les inconvénients des autres procédés de soudage connus.

## Description

La présente invention a pour objet un procédé de soudage de feuilles thermoformées de matière plastique, ainsi qu'une machine pour la mise en oeuvre de ce procédé.

Il est connu de réaliser par soudure l'assemblage de feuilles plastiques thermoformées afin d'obtenir des blocs alvéolaires susceptibles de recevoir de nombreuses applications. Ainsi pour des feuilles en PVC (Chlorure de polyvinyle), on a jusqu'à présent exécuté l'assemblage de ces feuilles thermoformées profilées par soudure aux ultrasons, ou par soudure haute fréquence, ou encore par collage.

Un tel mode d'assemblage est fiable pour le PVC, mais lorsque ce matériau brûle il dégage du chlore qui se combine avec l'hydrogène et l'oxygène de l'air pour former l'hypochlorite, gaz toxique.

On a donc proposé de remplacer le PVC par d'autres matériaux moins nocifs, ne contenant pas de chlore, et dont la combustion ne dégage que de l'eau. Le polypropylène et le polyéthylène par exemple sont ainsi avantageusement utilisés. Malheureusement il est en pratique particulièrement difficile, long et onéreux de souder par ultrasons entre elles des feuilles thermoformées dans l'un de ces matériaux. Par ailleurs, un tel soudage par haute fréquence est impossible. Le collage est par contre possible avec une colle adaptée au polypropylène, (par exemple l'Araldite, marque déposée) qui peut être assimilée à un adhésif. Mais cet adhésif vieillit mal, absorbe l'eau, et n'est en définitive pas compatible avec l'utilisation fréquemment prévue pour les feuilles thermoformées, en particulier lorsqu'elles sont destinées à constituer des blocs alvéolaires prévus pour des remblais, des réservoirs souterrains etc.

Pour mémoire on rappelle ci-dessous les méthodes de soudage classiques :
- Soudage par pince : Cette méthode consiste à venir pincer les deux éléments à souder entre deux doigts portés à une température suffisante pour faire fondre le plastique. Le chauffage se fait par contact, de sorte que la matière en fusion peut adhérer au doigt lors de son retrait, ce qui constitue un inconvénient sensible de ce procédé. En outre il n'est pas possible de souder plus de deux éléments à la fois, à moins de supprimer le doigt inférieur.
- soudage par miroir : Cette méthode est largement utilisée dans le domaine des matières plastiques, notamment pour le raccordement en bout des tubes. Les deux tubes à souder sont placés bout à bout sur un support, en laissant un espace de quelques millimètres entre leurs extrémités. Cette méthode a l'avantage de sa simplicité, mais elle est spécialement adaptée aux éléments de forte section. En effet lors de son retrait, le miroir enlève un peu de matière en fusion aux éléments à souder. Dans le cas du soudage en bout de tube plastique, cela ne porte pas à conséquence, mais pour une feuille de quelques centaines de microns d'épaisseur, la détérioration causée peut s'avérer importante.
- Soudure par ultrasons : Ce procédé présente l'avantage de permettre l'exécution de soudure dans des endroits difficilement accessibles à d'autres moyens plus classiques. Cependant il nécessite un générateur à ultrasons souvent onéreux, il est souvent impossible de souder plus de deux éléments en même temps, car il ne peut pas y avoir plusieurs niveaux de soudage superposés entre l'enclume et la sonotrode (appareil générateur des ultrasons), sous peine de dissipation de l'énergie vibratoire. En outre la pression minimum à appliquer par la sonotrode est relativement élevée, de sorte que ce procédé s'applique plus particulièrement aux structures rigides ou à des éléments plans. Enfin l'énergie vibratoire entre la sonotrode et la surface de contact des éléments à souder se transmet d'autant plus mal que leur module d'élasticité est faible.
- Soudage par infrarouge : la source de chaleur est constituée par une batterie de lampes infrarouges qui chauffe l'un ou les deux éléments à souder, provoquant ainsi leur fusion en certains points. Il suffit alors d'exercer un effort entre les deux éléments au niveau des zones en fusion pour provoquer leur soudage. Ce procédé présente des avantages certains, mais aussi une difficulté qui consiste à canaliser le rayonnement thermique vers les surfaces de soudage. La zone voisine de la surface de contact peut absorber une partie du rayonnement incident, et cette élévation de température peut causer son ramollissement, voire sa fusion partielle, et sa déformation. Il serait alors impossible d'appliquer un effort sur les éléments sans les détériorer, ce qui serait particulièrement préjudiciable pour des feuilles minces thermoformées.

L'invention a donc pour but de proposer un procédé de soudage permettant de remédier aux inconvénients des procédés connus.

Conformément à l'invention, le procédé de soudage de feuilles thermoformées de matière plastique est caractérisé en ce qu'on souffle de l'air chaud à une température déterminée sur des plots de soudage des feuilles deux à deux, tout en exerçant sur les feuilles des efforts transversaux afin de les maintenir appliquées l'une sur l'autre.

La source de chaleur est constituée par un jet d'air porté à haute température, qui chauffe l'un ou les deux plots de contact à souder, provoquant ainsi leur fusion en certains points. Il suffit alors d'exercer un effort entre les deux feuilles au niveau des zones en fusion pour provoquer leur soudage.

Suivant un mode de réalisation de l'invention, on dispose des buses de soufflage d'air chaud dans une machine de thermoformage par le vide de feuilles en matière plastique, au niveau des plots de soudage de deux feuilles superposées, on effectue d'abord le thermoformage des feuilles puis leur soudage par soufflage d'air chaud, soit sur un côté seulement des deux feuilles à souder, soit sur les deux côtés simultanément.

Suivant un second mode de réalisation du procédé conforme à l'invention, on empile une série de feuilles thermoformées les unes sur les autres afin de constituer un bloc alvéolaire délimitant un ensemble d'alvéoles horizontaux séparés par des plots de contact entre les feuilles, puis on introduit latéralement dans ces alvéoles et de chaque côté du bloc, des batteries des tubes équipés de buses de soufflage d'air chaud, afin de souder les plots entre eux.

Suivant un mode de mise en oeuvre possible du procédé, après soufflage d'air chaud, on souffle de l'air froid sur les plots de soudage, soit sur un côté seulement des deux feuilles à souder, soit sur les deux côtés simultanément.

La machine pour la mise en oeuvre du procédé ci-dessus comprend conformément à l'invention deux matrices de thermoformage de feuilles en matière plastique, ces matrices étant superposées symétriquement de part et d'autre d'un plan horizontal et reliées à des moyens de mise sous vide afin de thermoformer des feuilles interposées entre les matrices, et ladite machine comporte des tubes de soufflage d'air chaud puis, le cas échéant, d'air froid sur des plots de contact entre deux feuilles thermoformées, afin de souder celles-ci ensemble au niveau de leurs plots de contact.

Selon une autre forme de réalisation de l'invention, la machine pour la mise en oeuvre du procédé ci-dessus est destinée à permettre le soudage d'un bloc de feuilles, superposées par leurs plots de contact mutuel, ces feuilles délimitant entre elles des alvéoles horizontaux communiquant avec des alvéoles verticaux.

Conformément à l'invention, la machine comprend au moins une batterie de tubes déplaçables horizontalement et adaptés pour pouvoir être introduits latéralement dans lesdits alvéoles horizontaux, et munis chacun de buses de soufflage d'air chaud puis, le cas échéant, d'air froid sur les plots de contact entre les feuilles du bloc, et des moyens sont prévus pour appliquer sur la feuille supérieure du bloc une pression transmise à l'ensemble des plots de contact du bloc.

On peut ainsi souder ensemble très rapidement toutes les feuilles du bloc en une seule opération.

En outre, du fait qu'il est très simple de canaliser l'air chaud, ce procédé permet d'effectuer des soudures dans des endroits difficiles d'accès.

D'autres particularités et avantages de l'invention apparaîtront au cours de la description qui va suivre, faite en référence aux dessins annexés qui en illustrent plusieurs formes de réalisation à titre d'exemples non limitatifs.

La figure 1 est une vue en coupe partielle de deux feuilles plastiques thermoformées superposées, à souder suivant un premier mode de réalisation du procédé conforme à l'invention.

La figure 2 est une vue en élévation schématique d'un premier mode de réalisation de la machine de soudage selon l'invention.

La figure 3 est une vue en perspective partielle schématique d'un second mode de réalisation de la machine de soudage selon l'invention, ainsi que d'un bloc alvéolaire de feuilles thermoformées à souder entre elles.

La figure 4 est une vue en coupe partielle et en élévation latérale d'un bloc alvéolaire de feuilles à souder entre elles et de -batteries associées de tubes de soufflage d'air selon la figure 3.

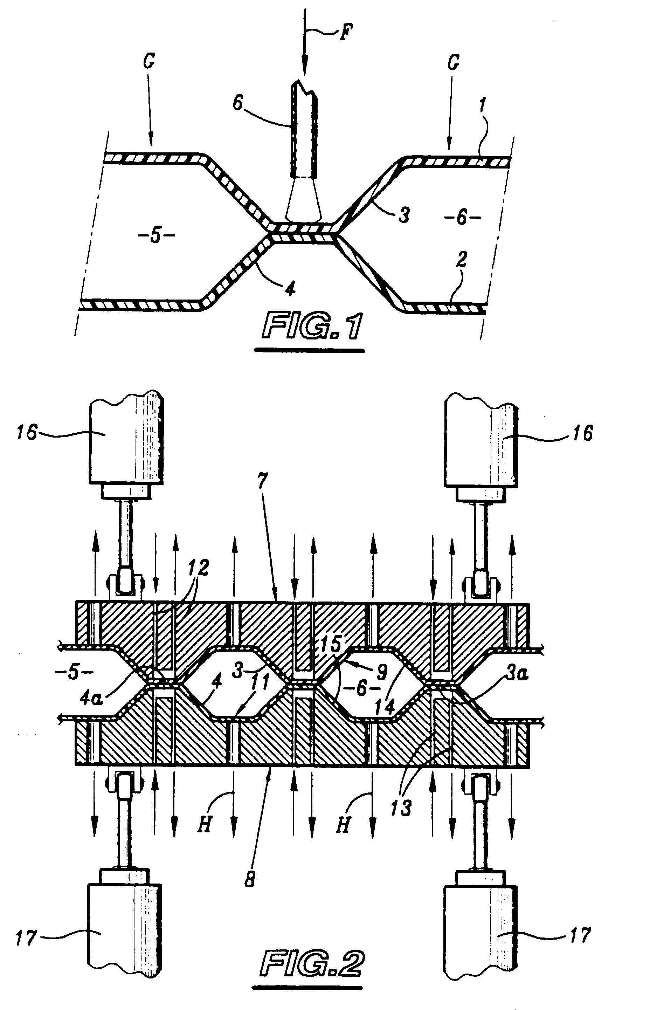

On voit à la figure 1 deux feuilles de matière plastique thermoformées 1, 2, superposées et présentant des bossages 3, 4 disposés à intervalles réguliers et formant des plots en contact mutuel, délimitant entre eux des alvéoles horizontaux 5, 6. Les feuilles 1, 2 peuvent être par exemple en polypropylène ou en polyéthylène.

Ces deux feuilles 1, 2 peuvent être soudées entre elles par les surfaces en contact de leurs plots 3, 4 par soufflage d'air chaud à une température déterminée, sur les plots de soudage 3, 4 au moyen de buses telles que 6, dirigées perpendiculairement aux surfaces horizontales en contact des plots 3, 4.

Le flux d'air chaud arrive de façon orthogonale (flèche F) sur les surfaces à souder, soit uniquement d'un côté des plots 3, 4 comme représenté à la figure 1, soit des deux côtés simultanément, un ensemble de buses similaires aux buses 6 étant alors disposé au-dessous des buses 6 et débouchant dans les plots 4 des feuilles inférieures 2. En outre on exerce par des moyens appropriés, tels qu'un ensemble de vérins non représenté, des efforts transversaux G sur les feuilles 1, 2 afin de les maintenir appliquées l'une sur l'autre. Après soufflage d'air chaud, on souffle de l'air froid sur les plots 3, 4 par les buses 6.

Le chauffage s'effectue donc sur la face opposée à la surface de contact de chaque feuille 1, 2.

A titre d'exemple numérique non limitatif, pour des feuilles en polypropylène, la température de l'air chaud peut être de 120°C, la durée du soufflage d'air chaud peut être de quelques dizaines de secondes, la température de l'air froid peut être la température ambiante et la durée de soufflage de l'air froid peut être de quelques dizaines de secondes.

La machine de soudage de feuilles thermoformées schématiquement représentée à la figure 2 comprend deux matrices superposées horizontalement 7, 8 de thermoformage par le vide (flèches H) de manière connue en soi, de feuilles plastiques 9, 11. Ces feuilles comportent des plots 3, 4 délimitant des surfaces à souder 3a, 4a.

La machine est équipée d'un ensemble de tubes 12 et 13 dirigés orthogonalement aux surfaces en contact 3a, 4a respectivement à l'intérieur des bossages profilés 14 et 15 des matrices 7, 8, conjugués des plots de soudage 3, 4. Les extrémités des tubes 12, 13 débouchent sur les sommets des bossages 14, 15 avec un faible écartement par rapport à ceux-ci, de manière à permettre l'évacutation de l'air chaud, puis de l'air froid soufflés sur les surfaces en contact mutuel 3a, 4a. Enfin la machine est équipée de moyens permettant d'exercer sur les matrices 7, 8 des efforts transversaux pour maintenir appliquées l'une sur l'autre les feuilles 9, 11, par exemple un ensemble de vérins hydrauliques 16, 17 convenablement disposés.

On effectue d'abord le thermoformage des feuilles 9, 11, de manière qu'elles épousent le profil des matrices symétriques 7, 8 grâce à l'action des moyens de mise sous vide (flèches H), les plots 3, 4 formés délimitant entre eux les alvéoles horizontaux 5, 6. Puis on souffle de l'air chaud à une température appropriée dans les tubes 12, 13, pendant une durée convenable, et enfin après fusion des zones en contact des plots 3, 4, de l'air froid à une température et pendant une durée appropriées.

Le soufflage d'air chaud peut être réalisé soit sur un seul côté, (l'un des jeux de tubes n'étant alors pas utilisé) soit sur les deux côtés simultanément.

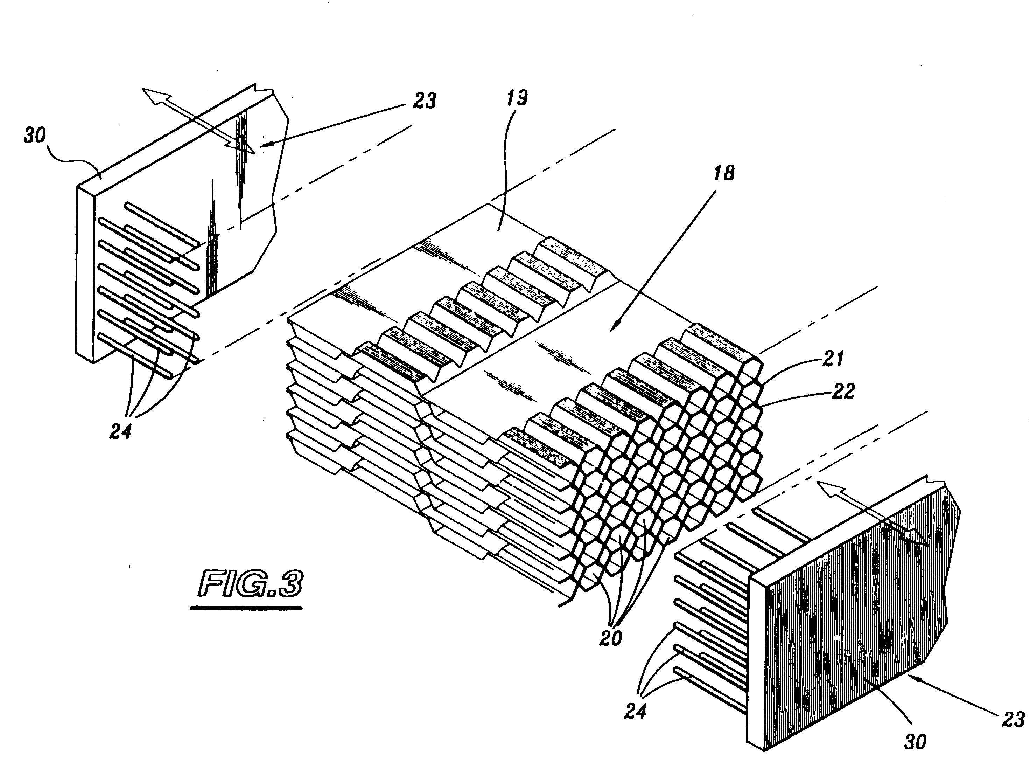

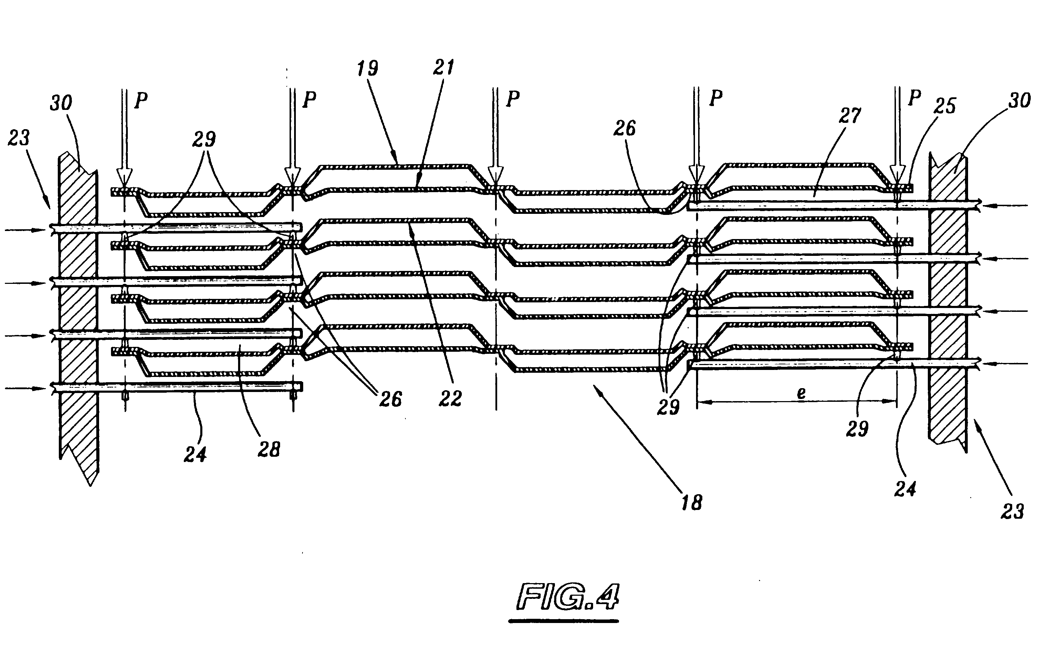

On a représenté à la figure 3 un bloc alvéolaire 18 constitué par un empilage de feuilles plastiques 19, 21, 22... thermoformées et profilées de manière à délimiter entre elles un ensemble d'alvéoles horizontaux 20 (figure 4). Les feuilles 19, 21, 22... présentent une configuration altemée délimitant une ensemble de plots 25, 26 de contact ainsi que des alvéoles horizontaux 27, 28 entre deux paires consécutives de feuilles accolées par les plots 25, 26.

La machine de soudage de l'ensemble des feuilles 19, 21, 22 du bloc 18 comprend au moins une batterie 23 de tubes 24 s'étendant horizontalement, parallèles entre eux, avec des intervalles d'écartement appropriés et fixés par l'une de leurs extrémités à une plaque verticale 30 de support. Dans l'exemple illustré aux figures 3 et 4, la machine comporte deux batteries 23 déplaçables horizontalement comme indiqué par les doubles flèches, au moyen d'un dispositif approprié connu en soi et non représenté. Le bloc alvéolaire 18 reposant sur un plan horizontal entre les deux batteries 23, les tubes 24 de celles-ci, peuvent être introduits latéralement dans les alvéoles horizontaux correspondants 27, 28 comme représenté à la figure 4. Ces tubes 24 sont munis chacun de buses 29 de soufflage d'air chaud, puis d'air froid, à savoir dans l'exemple représenté deux buses 29 séparées par un intervalle égal à la distance e entre deux plots consécutifs 25 ou 26 de contact. Avec cette longueur minimale des tubes 24 pénétrant à l'intérieur des alvéoles horizontaux 27, 28, il reste donc entre les tubes 24 des deux batteries 23, dans la zone centrale du bloc 18, un certain nombre de plots 25, 26 qui ne reçoivent pas d'air chaud.

Lors de la mise en place du bloc 18 dans l'unité de soudage, on applique une pression P sur les plots 25 de la feuille supérieure 19, par exemple au moyen de vérins non représentés, et cette pression se transmet de proche en proche sur tous les plots 25, 26 à souder. Ce procédé présente l'avantage de permettre d'obtenir les conditions de soudage requises (température et effort de contact) sur tous les plots à souder au même moment. Le temps de soudage est donc nettement moins élevé que dans le cas d'un soudage exécuté feuille à feuille suivant une variante de l'invention, pour réaliser le bloc alvéolaire 18. Suivant cette dernière technique, on soude en effet d'abord deux feuilles l'une à l'autre, puis on soude sur celles-ci les feuilles suivantes une par une afin de réaliser le bloc alvéolaire 18.

Par ailleurs, le soudage s'effectue seulement lorsque le bloc 18 est formé, de sorte que les feuilles 19, 21... ne subissent aucun mouvement dans la machine. Ainsi est assurée une bonne mise en position des feuilles 19... les unes par rapport aux autres.

A titre d'exemple numérique non limitatif, le temps de soufflage de l'air chaud par les buses 29 peut être de quelques dizaines de secondes à une température de 120°C le temps de soufflage d'air froid peut être de quelques dizaines de secondes à la température ambiante.

Dans le cas où une seule batterie 23 serait utilisée, il serait nécessaire de procéder au soudage en deux étapes sur les deux côtés opposés successifs.

## Revendications

1. Procédé de soudage de feuilles thermoformées (1, 2; 9, 11...) de matière plastique, caractérisé en ce qu'on souffle de l'air chaud à une température déterminée sur des plots (3, 4; 25, 26) de soudage des feuilles deux à deux, tout en exerçant sur les feuilles des efforts transversaux (P) afin de les maintenir appliquées l'une sur l'autre.

2. Procédé selon la revendication 1, caractérisé en ce qu'on dispose des tubes (12, 13; 24) de soufflage d'air chaud puis d'air froid dans une machine de thermoformage par le vide de feuilles (9, 11; 19, 21...) en matière plastique, au niveau des plots (3, 4; 25, 26) de soudage de deux feuilles superposées, on effectue d'abord le thermoformage des feuilles puis leur soudage par soufflage d'air chaud, soit sur un côté seulement des deux feuilles à souder, soit sur les deux côtés simultanément.

3. Procédé selon la revendication 2, caractérisé en ce qu'on soude d'abord deux feuilles (9, 11; 19, 21...) l'une à l'autre, puis on soude sur celles-ci les feuilles suivantes une par une afin de réaliser un bloc alvéolaire (18).

4. Procédé selon l'une des revendications 1 à 3, caractérisé en ce qu'après soufflage d'air chaud, on souffle de l'air froid sur les plots de soudage (3, 4; 25, 26), soit sur un côté seulement des deux feuilles à souder (9, 11, ...), soit sur les deux côtés simultanément.

5. Procédé selon la revendication 1, caractérisé en ce qu'on empile une série de feuilles thermoformées (19, 21, 22...) les unes sur les autres afin de constituer un bloc alvéolaire (18) délimitant un ensemble d'alvéoles horizontaux (27, 28) séparés par des plots (25, 26) de contact entre les feuilles, puis on introduit latéralement dans ces alvéoles et de chaque côté du bloc, des batteries (23) des tubes (24) équipés de buses (29) de soufflage d'air chaud puis d'air froid, afin de souder les plots (25, 26) entre eux.

6. Procédé selon la revendication 5, caractérisé en ce que les tubes (24) s'étendent sur une longueur telle que seuls les plots (25, 26) situés sur la périphérie du bloc alvéolaire (18) sont soudés.

7. Machine pour la mise en oeuvre du procédé selon l'une quelconque des revendications 1 à 6, caractérisée en ce qu'elle comprend deux matrices (7, 8) de thermoformage de feuilles (9, 11) en matière plastique, ces matrices étant superposées symétriquement de part et d'autre d'un plan horizontal et reliées à des moyens de mise sous vide (H) afin de thermoformer des feuilles interposées entre les matrices, et en ce que ladite machine comporte des tubes (12, 13) de soufflage d'air chaud puis, le cas échéant, d'air froid sur des plots (3, 4) de contact entre deux feuilles (9, 11) thermoformées afin de souder celles-ci ensemble au niveau de leurs plots de contact.

8. Machine selon la revendication 7, caractérisée en ce que des tubes (12, 13) de soufflage d'air sont associés à chaque matrice (7, 8) et orientés perpendiculairement au plan des surfaces en contact (3a, 4a) des plots (3, 4) des feuilles (9, 11).

9. Machine selon la revendication 7, caractérisée en ce qu'elle comporte des moyens pour maintenir les matrices (7, 8) appliquées l'une sur l'autre à leurs zones de contact avec les feuilles thermoformées, par exemple des vérins (16, 17) orientés verticalement, les matrices étant sensiblement horizontales.

10. Machine pour la mise en oeuvre du procédé selon l'une quelconque des revendications 1 à 6, destinée à permettre le soudage d'un bloc (18) de feuilles thermoformées (19, 24, 22) superposées par leurs plots (25, 26) de contact mutuel, ces feuilles délimitant entre elles des alvéoles horizontaux (27, 28), caractérisée en ce qu'elle comprend au moins une batterie (23) déplaçable horizontalement de tubes (24) dirigés horizontale-ment, adaptés pour pouvoir être introduits latéralement dans lesdits alvéoles horizontaux, et munis chacun de buses (29) de soufflage d'air chaud puis, le cas échéant, d'air froid sur les plots (25, 26) de contact entre les feuilles du bloc, et des moyens sont prévus pour appliquer sur la feuille supérieure (19) du bloc une pression (P) transmise à l'ensemble des plots de contact du bloc.

11. Machine selon la revendication 7, caractérisée en ce que chaque tube (24) est pourvu de deux buses (29) de soufflage d'air séparées par un intervalle égal à la distance (e) entre deux plots consécutifs (25 ou 26) de contact d'une feuille (19, 21...).

12. Machine selon la revendication 9, caractérisée en ce qu'elle comprend deux batteries (23) de tubes (24) déplaçables latéralement au bloc (18) de feuilles (19, 21...) et horizontalement de chaque côté dudit bloc, les longueurs des tubes à l'intérieur du bloc étant au moins égales à l'intervalle (e) entre deux plots consécutifs (25 ou 26) de contact entre les feuilles.
